# EUROPEAN PATENT SPECIFICATION

(11) **EP 2 519 766 B1**
(45) Date of publication and mention of the grant of the patent: **24.12.2014**
(21) Application number: 10816359.3
(22) Date of filing: 30.12.2010
(51) Int. Cl.: F16L 37/088, F16L 33/035, F16L 37/14

(54) **A QUICK CONNECTOR ELEMENT**
SCHNELLANSCHLUSSELEMENT
ÉLÉMENT RACCORD RAPIDE

(30) Priority: 29.12.2010 TR 201011091; 31.12.2009 TR 200910068
(43) Date of publication of application: 07.11.2012
(73) Proprietor: Teklas Kaucuk Sanayi Ve Ticaret A.S., 41400 Kocaeli (TR)
(72) Inventor: BICICI, Banu, 41400 Kocaeli (TR); BOZKURTLU, Murat, 41400 Kocaeli (TR); SONMEZ, Salih Bekir, 41400 Kocaeli (TR)
(74) Representative: Yavuzcan, Alev
(86) International application number: PCT/IB2010/056140
(87) International publication number: WO 2011/080717

(56) References cited:
- EP-A1- 1 288 554
- EP-A1- 1 806 528
- WO-A1-2005/106312
- FR-A1- 2 766 253
- FR-A1- 2 776 747
- FR-A1- 2 856 770
- US-A1- 2002 071 718

## Description

The present invention relates to a quick connector element also called as coupling, used for joining a flexible pipe with a rigid pipe produced from a metal, plastic or any other material. The present invention particularly relates to the quick connector element used in automobile fluid circuits for joining a rubber hose with a rigid pipe.

### Prior Art

Various connector elements are used in fluid circuits wherein a rigid pipe and a hose are required to be joined. These quick connector elements, which are also called 'couplings', provide the fluid flow between the hose which is generally produced from rubber material, and the rigid pipe which is produced from hard plastic or metal, by undetectably connecting to the hose at their one end, and locking onto the rigid pipe at their other end. The feature of these quick connector elements is that they can be undetachably joined with the hose in a fluid tight manner, and that at their other end they have a practical locking mechanism providing an easily detachable, fluid tight assembly with the rigid pipe.

Couplings used in the state of the art automotive embodiments, have a cylindrical body generally one end of which is connected to the hose and the other to the rigid pipe, one or more than one sealing element (0-ring) provided at the inner cross-section of this body for sealing purposes and a retaining element provided at the side of the body connected to the rigid pipe. When the rigid pipe provided with a peripheral bulge at the end portion thereof is inserted into the coupling body, the said retaining element enables the coupling to lock on the pipe by creating a barrier behind the said bulge on the pipe. The retaining element used is generally a metal spring having a U-shaped profile. When the spring is mounted onto the body, both legs pass through the slots provided on the coupling body. When the rigid pipe is inserted into the coupling body, the peripheral bulge of the pipe first forces both legs of the spring into stretching outwards and upon passing the bulge, the legs of the spring form a barrier behind the bulge by reverting to their previous form and narrowing. Thus, the rigid pipe and the connector element cannot be separated from each other without removing the spring from the canals thereof on the body by being pulled from above. In different state of the art embodiments, examples wherein the locking spring is produced from plastic material are present. In embodiments of this type, the locking mechanism is released by elastically deforming the legs of the spring by means of rotating the spring on the body, pushing it from above or moving it backwards in axial direction and thereby removing it from the bulge on the rigid pipe. Thus, a connector element which can be removed more easily in crowded engine compartments without the need for additional apparatus is obtained.

A metal ring generally known as press-ring is used to connect the coupling to the hose in an inseparable way. After the hose is mounted onto the coupling body, this metal ring is slipped thereover and is crimped on the hose by force. Thus, the hose is provided to get stuck between the ring and the body. Another method described in European Patent No. EP0392234 B1 is to inject plastic material onto the hose/coupling body by means of overmolding method. In this method, it is aimed that the melt plastic material shrinks upon cooling and thereby compressing the hose therebetween by creating a clamping force.

Another known quick connector is disclosed in the document US2002/0071718A1.

In all the state of the art examples, the retaining element on the coupling provides only the connection between the coupling and the rigid pipe. The connection between the coupling and the hose is realized by means of production techniques which require that the operation is realized in a separate station as described above and by using different additional components. And this causes a loss in terms of cost and efficiency when considered from the point of production.

In order to eliminate these disadvantages, by means of the present invention a quick connector element is described which can be obtained after a cheaper and simpler assembly process, which can be easily separated from the rigid pipe, wherein an inseparable connection with the hose is realized by means of just a single retaining element.

In the preferred version of the present invention, this retaining element is a one-piece plastic element that can be produced by injection method in a single step. In the alternative version of the present invention, the retaining element is a plastic piece composed of a fixing portion composed of the holding sleeve and the compression collar and a latching portion, and the latching portion and the holding sleeve are produced as a one-piece element by injection method in one step.

A quick connector element of the present invention is described in detail by referring to the attached figures.

In figures:
Figure 1 ..... is an exploded view of the connector element with the pipe and the hose.
Figure 2 a... is the isometric view of the connector element body.
Figure 2b... is the cross-sectional views of the connector element body.
Figure 3 ..... is the view wherein the connector element is joined with the hose.
Figure 4 ..... is the isometric view of the retaining element.
Figure 5 ..... is the cross-sectional view wherein the connector element is joined with the hose and the rigid pipe.
Figure 6 ..... is the cross-sectional views wherein the connector element is locked (a) and released (b) on the pipe.
Figure 7 ..... is the cross-sectional view of the fixing portion of the retaining element before the assembly.
Figure 8 ..... is the cross-sectional view of the fixing portion of the retaining element after the assembly.
Figure 9 (a) and (b)... shows the alternative connection types of the arms of the fixing portion of the retaining element.
Figure 10.....is the cross-sectional view of an alternative version of the fixing portion of the retaining element after the assembly.
Figure 11 - 15 show the embodiments related to an alternative arrangement of the retaining element.

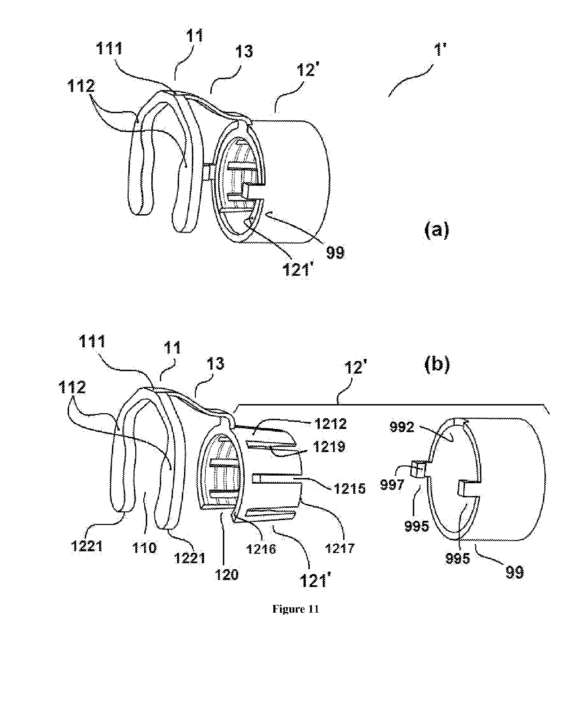

Figure 11 ..... is the isometric view of the retaining element after the assembly (a) and before the assembly (b).

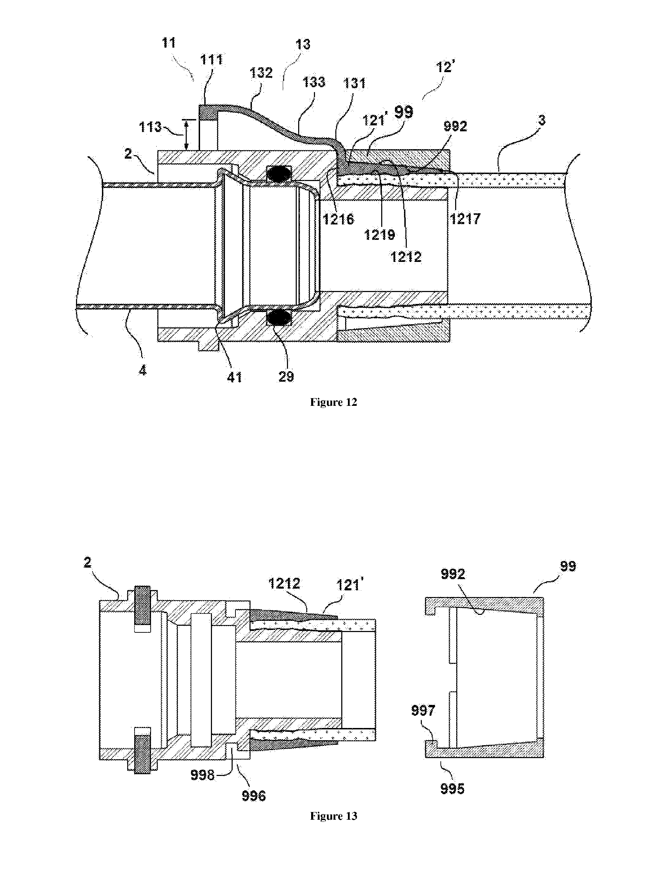

Figure 12 ..... is the cross-sectional view wherein the connector element is joined with the hose and the rigid pipe.
Figure 13 ..... is an exemplary view of the preferred embodiment of the locking mechanism of the holding sleeve and the compression collar.

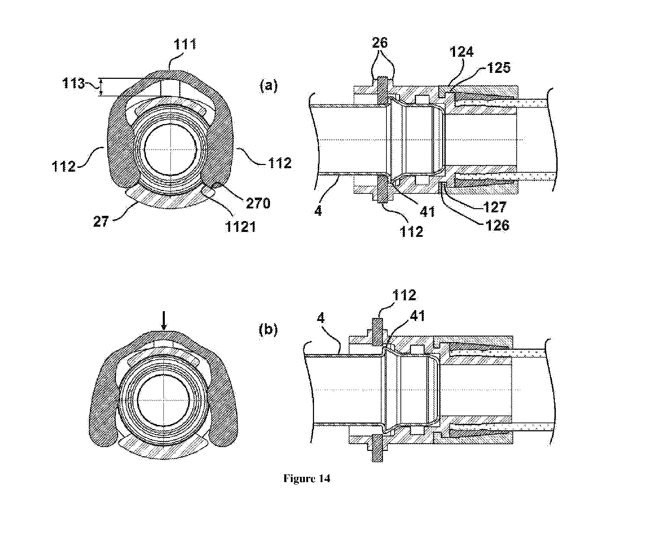

Figure 14 ..... is the cross-sectional views wherein the connector element is locked (a) and released (b) on the pipe.

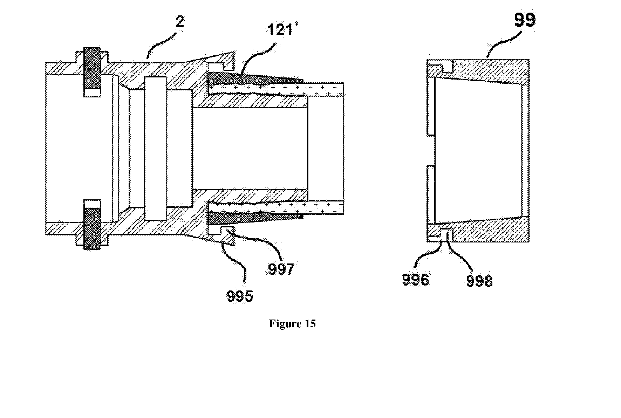

Figure 15 ..... is an exemplary view of an alternative embodiment to the embodiment in Figure 13 of the locking mechanism of the holding sleeve and the compression collar.

The elements illustrated in the figures are numbered as follows:

**[Table 1]**

| | | |
|---|---|---|
| **1, 1'** | | Retaining element |
| **2** | | Coupling Body |
| **3** | | Hose |
| **4** | | Rigid Pipe |
| **11** | | Latching portion |
| **12, 12'** | | Fixing portion |
| **13** | | Bridge |
| **41** | | Peripheral bulge |
| **21** | | Mouth portion |
| **22** | | Tail portion |
| **25** | | Slot |
| **26** | | Axial support wall |
| **27** | | Radial support wall |
| **270** | | Inclined surface |
| **29** | | Sealing element |
| **100** | | Coupling |
| **110** | | Latching portion opening |
| **111** | | Web |
| **112** | | Shanks |
| **113** | | Operating clearance |
| **120*** | | Fixing portion opening |
| **121**, **121'** | | Holding sleeve |
| **122** | | Arm |
| **123, 123', 123"** | | Connection area |
| **124, 125, 126, 127** | | Locking means |
| **124** | | Tongue |
| **125** | | Aperture |
| **126** | | Recess |
| **127** | | Protrusion |
| **128', 128**" | | Pin |
| **129', 129"** | | Pin hole |
| **131, 132, 133** | | Arcs forming 's' |
| **1121** | | Free ends of the shanks |
| **1210** | | Circular arc |
| **1221** | | Distal ends |
| **f 1** | | Diameter of the circular arc |
| **f 2** | | Outer diameter of the hose on tail portion |
| **99** | | Compression collar |
| **992** | | **Internal face of compression collar** |
| **1219** | | Internal face of the holding sleeve |
| **1212** | | External face of the holding sleeve |
| **995**-**998** | | Locking means |
| **995** | | Tenon |
| **997** | | Protuberance |
| **996** | | Housing |
| **998** | | Indentation |
| **1215** | | Axial slits |
| **1216** | | Edge of the holding sleeve |
| **1217** | | Edge of the holding sleeve |

In the text, the flexible pipe **(3)** to which the coupling **(100)** is irremovably connected is generally referred to as the flexible hose **(3).** The said expression covers all kinds of flexible pipe **(3)** produced from rubber, thermoplastic elastomer, thermoplastic or another material.

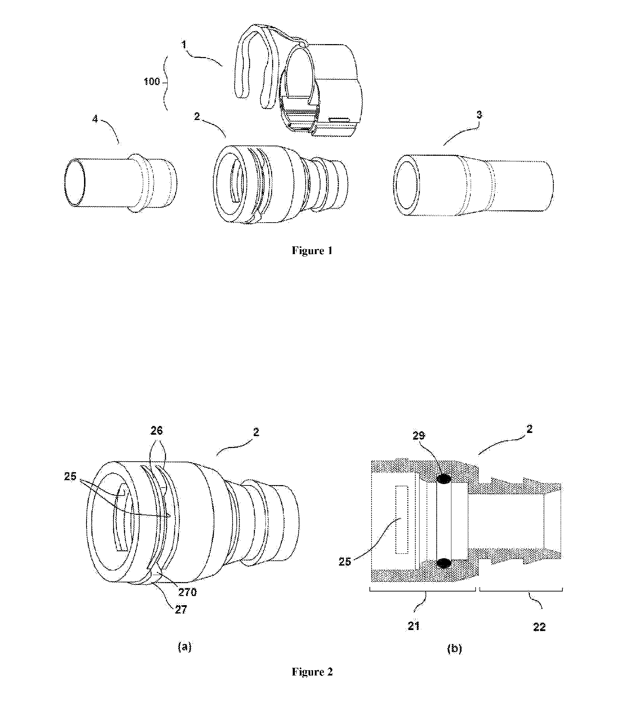

In order to simplify the description, ablative impressions such as 'bottom', 'top', 'side' used in the text are used by basing on the view in the Figure 1.

As shown in Figure 1, the coupling **(100)** of the present invention is composed of a body **(2)** and a retaining element **(1)** in order to join a hose **(3)** and a rigid pipe **(4).**

The body **(2)** preferably in hollow cylindrical shape and produced from plastic material composes of two portions, a mouth portion **(21)** and a tail portion **(22)** along the longitudinal axis as shown in Figure 2. The mouth portion **(21)** is the portion of the body **(2)** that is mounted over the rigid pipe **(4).** In this portion **(21),** two peripheral slots **(25)** are preferably provided facing each other. Each of the slots **(25)** draws approximately an arc so as to be on both sides of the body **(2).** As shown in Figure 2-a, both sides of the slots **(25)** in axial direction are limited by the axial support walls **(26)** provided so as to protrude from the body **(2).** A radial support wall **(27)** which remains circumferentially between the two slots **(25)** is also provided at the bottom of the body **(2).** The radial support wall **(27)** is also shaped so as to protrude from the body **(2)** and has an inclined surface **(270)** forming the lower border of the slots **(25)** at both sides. In the inner cross-section of the mouth portion **(21)** of the body **(2),** one or more sealing elements **(29)** can be disposed for sealing purposes.

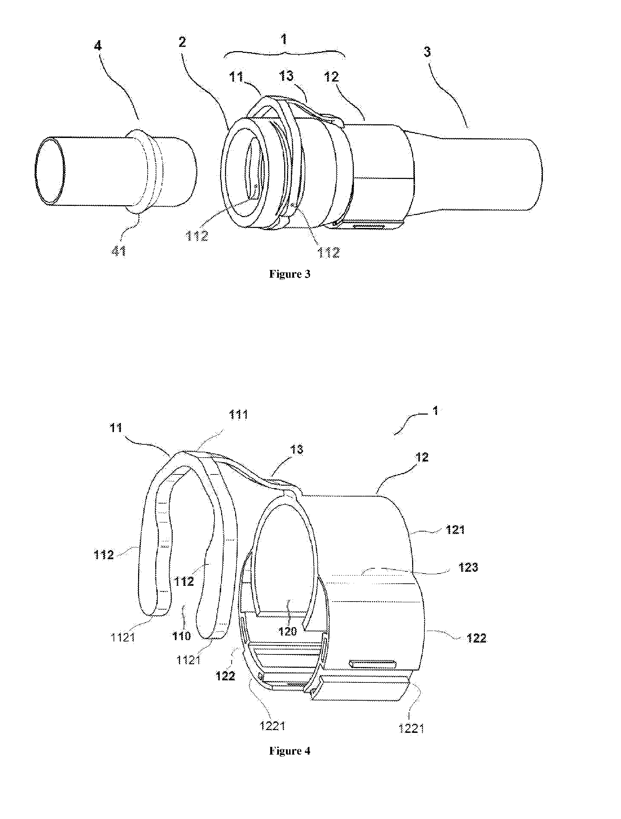

The hose **(3)** is mounted over the tail portion **(22)** of the body **(2).** The outer surface of the tail portion **(22)** can be smooth, or can be in toothed, grooved or serrated form in order to prevent slippage of the hose **(3)** during operation. After the hose **(3)** is mounted over the tail portion (**22**)of the body(**2**), the retaining element **(1)** is mounted onto the body **(2)** and the hose **(3)** (shown in Figure 3).

The retaining element **(1)** an isometric view of which is shown in Figure 4, has a latching **(11)** and a fixing **(12)** portion. The fixing portion **(12)** is mounted onto the tail portion **(22)** of the body **(2)** and by circumferentially squeezing it undetachably fastens the hose **(3)** to the tail portion **(22).** As shown in Figure 3, when the fixing portion **(12)** is mounted like this, the latching portion **(11)** connected thereto seats onto the mouth portion **(21)** of the body **(2)** and provides an easily-removable connection with the rigid pipe **(4)** inserted therein in this portion **(21).**

The latching portion **(11)** is connected to the holding sleeve **(121)** of the fixing portion **(12)** by means of a bridge **(13)** which has a spring elastic configuration (shown in Figure 4). This bridge **(13)** provides the flexible connection between the fixing portion **(12)** which becomes rigid after being mounted and the latching portion **(11)** which is required to be mobile in order to realize the aforementioned detachable connection.

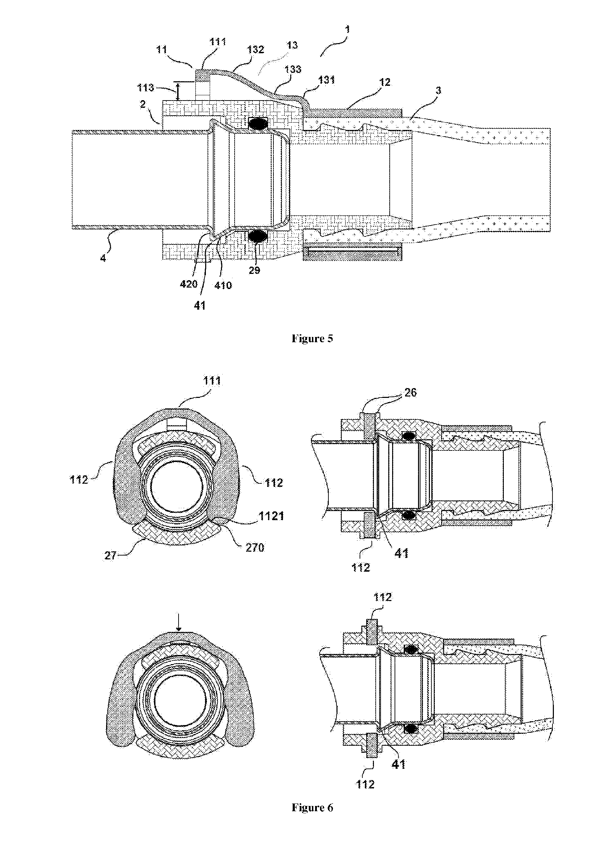

The latching portion **(11)** has an approximately U-shaped cross-section which is mounted such that the opening **(110)** faces the coupling body **(2).** It **(11)** is composed of a web **(111)** which stays over the body **(2)** in the assembly position and two flexible shanks **(112)** which extend from both ends of this web **(111)** and enter into the said slots **(25)** on both sides of the body **(2).** In the locked position, the free ends **(1121)** of the said shanks **(112)** seat on the inclined surface **(270)** of the said radial support wall **(27)** on the mouth portion **(21)** of the body **(2)** and the web **(111)** stays above such that an operating clearance **(113)** remains between the body **(2)** and the web **(111)** (shown in Figure 5). In this position, the axial support walls **(26)** on the body **(2)** support the shanks **(112)** in the axial direction.

A peripheral bulge **(41)** which continues completely or partially is disposed on the end of the rigid pipe **(4)** which is inserted into the mouth portion **(21)** of the body **(2).** The slots **(25)** on the said mouth portion **(21)** are aligned so as to remain behind the said peripheral bulge **(41)** when the rigid pipe **(4)** is inserted into the body **(2).** Thus, when the retaining element **(1)** is mounted onto the body **(2),** the shanks **(112)** of the latching portion **(11)** entering into the slots **(25)** stay behind the peripheral bulge **(41)** provided on the pipe **(4)** and make it impossible that the pipe **(4)** is removed from the inside of the coupling body **(2)** by being pulled. In this position shown in Figure 6-a, the radial support walls **(26)** on both sides of the slots **(25)** increase the safety of the connection by axially supporting the shanks **(112)** all along the surface of the cross-section.

The bridge **(13)** which connects the latching portion **(11)** of the retaining element **(1)** to the holding sleeve **(121)** of the fixing portion **(12),** starts from the said web **(111)** and joins with the holding sleeve **(121)** of the fixing portion **(12)** mounted onto the hose **(3)** at the tail portion **(22)** of the body **(2)** at the other end.

The fixing portion **(12)** of the retaining element **(1)** is composed of the said holding sleeve **(121)** which has an approximately C-shaped cross-section and auxiliary elements which secure the holding sleeve **(121)** on the hose **(3).** In the preferred version of the present invention, these auxiliary elements are composed of at least one, preferably two arms **(122)** provided as connected to the holding sleeve **(121).**

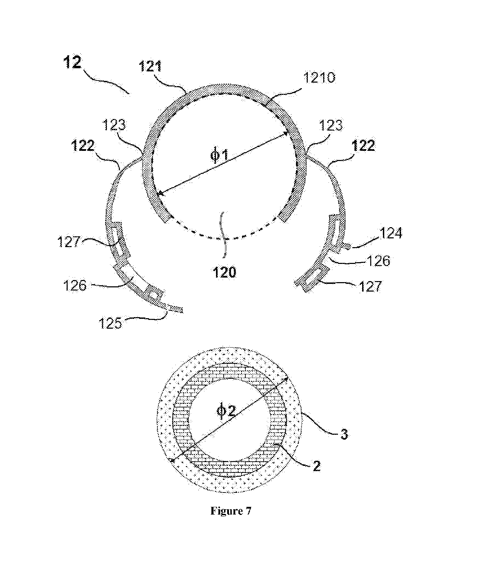

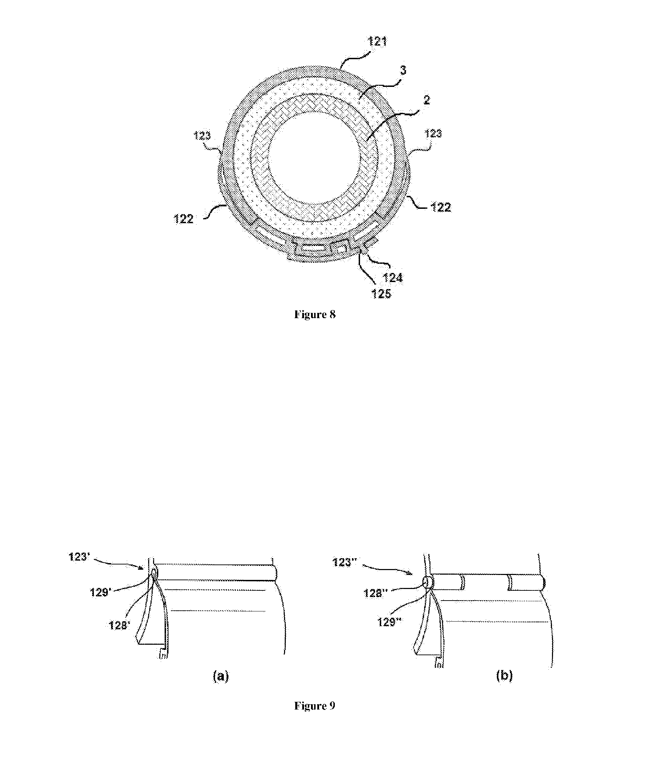

In Figure 7 and 8, the cross-sections of the fixing portion **(12)** of the retaining element **(1)** are shown before and after the assembly thereof onto the hose **(3).**

The approximately C-shaped cross-section of the holding sleeve **(121)** is shaped so as to draw a circular arc **(1210) .** The diameter of this circular arc ( **f1** ) is smaller than the outer diameter ( **f2** ) of the hose **(3)** when mounted on the tail portion **(22)**. The holding sleeve **(121)** is not a fully closed arc but it has a preferably 90°-opening **(120)** to enable easy assembly onto the hose **(3).** This opening **(120)** can vary between 30° and 150° depending to the diameter of the hose **(3) .**

In the preferred version of the present invention, the arms **(122)** used to secure the holding sleeve **(121)** on the hose **(3)** are preferably in circular arc shape and provided at both sides of the said opening **(120)** movably connected to the holding sleeve **(121).** Within the scope of the present invention, the connection area **(123)** of the arm **(122)** and the holding sleeve **(121)** is composed of a preferably flexible film zone. In an alternative embodiment, the connection in this area **(123')**can be obtained by means of any pivotable configuration which enables the arms **(122)** to move inwards and outwards. Figure 9-a shows an alternative connection area **(123')** obtained by means of a pin **(128')** and a pin hole **(129').** In this configuration, a cylindrical canal which functions as the pin hole (129') is provided at the connection area **(123').The** arm **(122)** has a cylindrical head portion which seats into this hole **(129') and** functions as the pin **(128')** By this pin **(128')** on the arm **(122)** seating into the hole **(129')** on the holding sleeve **(121),** the said alternative pivotable connection is obtained. Another alternative of this connection area **(123")** is shown in Figure 9-b, where the pin hole **(129") is** provided concentrically on the holding sleeve **(121)** and the arm **(122),** and the connection is realized by inserting an independent pin **(128")** through both pin holes **(129").**

When the arms **(122)** which are open in the released position shown in Figure 7 are closed towards over the holding sleeve **(121)** as shown in the assembled position in Figure 8, the distal ends thereof **(1221)** seat onto each other and are locked in this way. This fixation is obtained preferably by using mechanic locking means **(124-127).** The said locking means **(124-127)** basically comprise the tongue **(124),** the aperture **(125),** the recess **(126)** and the protrusion **(127).** Within the scope of the present invention, the said fixation is obtained by seating a protrusion **(127)** formed on one arm **(122)** into a recess **(126)** formed on the other arm **(122).** In order to strengthen the connection, both recesses **(126)** and protrusions **(127)** are formed on each arm **(122).** Thus, when the arms **(122)** are closed over each other, a cage configuration is obtained. Additionally, by a tongue **(124)** formed on one arm **(122)** being passed through an aperture **(125)** formed on the other arm **(122),** an additional lock is provided and also it becomes possible to visually check if the arms **(122)** completely interlock.

As an alternative to this mechanical method provided by means of recesses **(126)** and protrusions **(127),** fixing the arms **(122)** onto each other can be realized by means of plastic welding and chemical adhesive or the described mechanical locking can be used together with the application of welding or adhesive.

As shown in Figure 8, when the arms **(122)** close and lock, they also close the opening **(120)** of the holding sleeve **(121)** and complete the said circular arc **(1210)** of the holding sleeve **(121)** into a closed circle. Thus, the fixing portion **(12)** of the retaining element **(1)** forms a closed and rigid circle which surrounds and compresses the hose **(3)** after the assembly. Since the diameter ( **f1** ) of this arc **(1210)** is smaller than the diameter ( **f2** ) of the hose **(3)** on the tail portion (22) as mentioned above, the fixing portion **(12)** squeezes the hose **(3)** over the tail portion **(22)** by exerting an all-around pressure and prevents the hose **(3)** from coming out of its place.

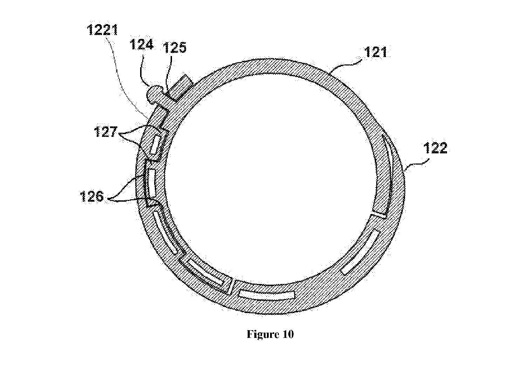

The same configuration obtained with a single arm instead of two arms is shown in Figure 10. The only difference in this alternative version is that the corresponding recesses and protrusions **(126, 127)** that the recesses and protrusions **(126, 127)** on an arm **(122)** work with are formed directly on the holding sleeve **(121)** instead of a second arm **(122).** Again, in this one-arm **(122)** version, welding and adhesion operations can be applied alone or in addition to the mechanical locking.

While the coupling **(100)** is mounted onto the rigid pipe **(4),** the bulge **(41)** on the pipe **(4)** forces the flexible shanks **(112)** of the fixing portion **(11)** to open to the two sides. In order to realize this stretching, the portion of the bulge **(41)** facing the coupling body**(2)** is conical as shown in the figures. The shanks **(112),** pass the bulge **(41)** by stretching slightly, and just after the bulge (41) they return to their original position and form a barrier so that the pipe **(4)** cannot be removed from the body **(2)** under the impact of axial loads.

When the coupling **(100)** is desired to be detached from the pipe **(4),** it is sufficient to push over the web **(111)** of the latching portion **(11).** While, due to the effect of the force generated as a result of pushing, the web **(111)** approaches towards the body **(2)** as much as the operating clearance **(113),** the free ends **(1121)** of the shanks **(112)** are forced to slide over the inclined surface **(270)** of the radial support wall **(27).** Thanks to the inclination of this surface **(270),** as the web **(111)** is pushed, the shanks **(112)** are provided to stretch outwards and this, as shown in Figure 6-b, moves the shanks **(112)** away from the peripheral bulge **(41)** on the pipe **(4).** Thus, the coupling **(100)** can be easily removed from the rigid pipe **(4)** by being pulled.

The shape of the bridge **(13)** which joins the latching **(11)** and the fixing portions **(12)** of the retaining element **(1)** is preferably S-shaped so as to enable and soften this vertical movement of the web **(111).** As shown in Figure 5, the bridge **(13)** forms a bend **(131)** just after the area where it joins with the holding sleeve **(121),** and then first draws a concave arc **(133)** so as to approach to the coupling body **(2)** and afterwards moves away from the body **(2)** by drawing a convex arc **(132)** and joins with the web **(111).** This bridge **(13)** structure also makes it impossible that the shanks **(112)** of the latching portion **(11)** involuntarily dislodge from the slots **(25)** wherein they are placed, once the assembly is completed.

While the openings **(110, 120)** of the latching and fixing portions (**11**, **12**) of the retaining element **(1)** face the same direction, the bridge **(13)** joins the web **(111)** and the holding sleeve **(121)** so as to stay at the opposite side of these openings **(110, 120).** Thus, the retaining element **(1)** can be easily seated in one movement onto the body (2) and the hose **(3),** and as the arms **(122)** on the fixing portion **(12)**are locked, assembly of the coupling **(100)** itself is realized at the same time with the fastening of the coupling **(100)** onto the hose (**3**).

In Figures 11 through 15 show the alternative embodiment of the present invention. In this embodiment, the fixing portion **(12')** of the retaining element **(1')** is again composed of a holding sleeve **(121')** of an approximately C-shaped cross-section, and auxiliary elements to secure this holding sleeve **(121')** onto the hose **(3),** but a compression collar **(99)** is used in this embodiment as the auxiliary element instead of the arm **(122).**

As shown in Figure 11, in this version the holding sleeve **(121')** has axial slits **(1215)** provided circumferentially. These axial slits **(1215)** starts from the edge **(1217)** of the holding sleeve **(121')** on the side of the hose **(3)** and ends near the other edge **(1216)** thereof joining with the bridge **(13).**

As shown in Figure 12, in this version, the external face **(1212)** of the holding sleeve **(121**'**)** is sloped in the axial direction. This inclination is shaped so as to cause the thickness of the holding sleeve **(121')** to decrease towards the free edge **(1217)** on the side of the hose **(3)** from the edge **(1216)** joining with the bridge **(13).** The internal face **(1219)** is preferably in toothed, grooved or serrated form in order to compress the hose **(3)** better.

The compression collar **(99)** used as the auxiliary element which secures the holding sleeve **(121')** onto the hose **(3)** is in hollow cylindrical shape and is also shaped so as to be slipped over the holding sleeve **(121')** by being moved in the axial direction, and as shown in Figure 11 and 12, the internal face **(992)** thereof is sloped as in the same degree as the external face **(1212)** of the holding sleeve **(121').** Thus, the collar **(99)** forces the holding sleeve **(121')** to compress radially while being slipped over the holding sleeve **(121')** by being moved in the axial direction. The holding sleeve **(121')** facilitates this compression thanks to the ability of contraction of the gaps of the axial slits **(1215)** thereon and moreover any possible breaking, cracking etc. problems that may occur on the holding sleeve **(121')** are prevented. By means of this method, when the compression collar **(99)** is brought to the assembly position so as to close the holding sleeve **(121')** in the axial direction, the hose **(3)** is enclosed by being squeezed between the tail portion **(22)** of the coupling body **(2)** and the holding sleeve **(121')** as shown in Figure 12.

In order that the connection does not loosen as a result of the backwards movement of the said compression collar **(99)** in the axial direction, the collar **(99)** can be secured to the mouth portion **(21)** of the coupling body **(2)** by various methods.

Preferably mechanical locking means are used in order to secure the compression collar **(99)** on the holding sleeve **(121').** In the preferred version, the said fixation is obtained by a tenon **(995)** provided on the compression collar **(99)** seating into a housing **(996)** provided on the mouth portion **(21)** of the coupling body **(2).** As shown in Figure 11(b) and 13, the tenon **(995)** is in extension shape extending towards the mouth portion **(21)** of the coupling body **(2)** from the edge of the compression collar **(99)** and in partially flexible form. A protuberance **(997)** is formed on the tenon **(995)** and preferably on the free end thereof so as to face inside. Corresponding to this approximately L-shaped cross section of the tenon **(995),** the housing **(996)** has an indentation **(998).** As shown in Figure 14(a), when the tenon **(995)** seats into the housing **(996)** in the assembled position, the said protuberance **(997)** on the tenon **(995)** seats into the said indentation **(998)** on the said housing **(996)** and inseparably secures the compression collar **(99)** onto the coupling body **(2)** and hence onto the holding sleeve **(121').** In this embodiment, the said tenon **(995)** is provided one, preferably two or more than two in number circumferentially around the compression collar **(99).** The housing **(996)** is provided on the body **(2)** in line with the placement and number of the tenons **(995).**

The locking operation described above can be alternatively obtained by providing the tenon **(995)** attached to the coupling body **(2)** and the housing **(996)** on the compression collar **(99).** This alternative embodiment is shown in Figure 15.

Other than the two methods described above, the fixation of the compression collar **(99)** onto the holding sleeve **(121')** can be realized by securing the collar **(99)** to the coupling body **(2)** by screwing, welding or adhesion methods.

## Claims

1. A quick connector element (100) which is used to detachably connect a flexible hose (3) to a rigid pipe (4) having a peripheral bulge (41) on the end thereof, which is composed of a hollow cylindrical body (2) and a retaining element (1) mounted onto this body (2), the said body (2) having a tail portion (22) which can be inserted into the said flexible hose (3) and which has an external face in toothed, grooved or smooth form and a mouth portion (21) into which the said rigid pipe (4) can be inserted and on which two opposing peripheral slots (25) are disposed,
wherein the said retaining element (1) is preferably produced from plastic material by injection molding and it is composed of
- a fixing portion (12) that in use seats onto the flexible hose (3) mounted over the tail portion (22) of the body (2) in the assembled position and undetectably secures the flexible hose (3) on the tail portion (22) by circumferentially surrounding and squeezing it, and
- a latching portion (11) that seats onto the mouth portion (21) of the body (2) in the assembled position and secures the rigid pipe (4) in an easily detachable manner in the said mouth portion (21), and that is composed of a web (111) which stays over the body (2) and flexible shanks (112) which extend from both ends of this web (111) and engage with the peripheral bulge (41) of the rigid pipe (4) by passing through the said slots (25) on the body (2) at both sides
- a bridge (13) that joins the said latching and fixing portions (11, 12)
and
said body (2) further having axial support walls (26) protruding from the body (2) at both axial sides of the said slots (25) and a radial support wall (27) that protrudes at the bottom side thereof and circumferentially between the said slots (25) such that said radial support wall (27) has an inclined surface (270) supporting the free end (1121) of the shanks (112) when the said shanks (112) enter into the said slots (25)

2. The quick connector element (100) as in Claim 1, **characterized in that** the said fixing portion (12) is composed of a holding sleeve (121, 121') that has an approximately C-shaped cross-section which follows a circular arc (1210) and which has a 30° - 150° opening (120), and auxiliary elements that secure the holding sleeve (121, 121') on the flexible hose (3).

3. The quick connector element (100) as in Claims 2, **characterized in that** the said auxiliary elements are composed of at least one, preferably two arms (122) provided as attached to the holding sleeve (121).

4. The quick connector element (100) as in Claim 3, **characterized in that** the connection between the arm (122) and the holding sleeve (121) is achieved in an area (123') comprising a pin (128') disposed on the arm (2) seating into a pin hole (129') disposed on the holding sleeve (121) or an area (123") comprising an independent pin (128') seating into a pin hole (129') concentrically provided on the arm (122) and the holding sleeve (121) or preferably an area (123) composed of a flexible thin film zone.

5. The quick connector element (100) as in Claim 4, **characterized in that** the said auxiliary elements are composed of two arms (122) which are movably connected to the holding sleeve (121) on both sides of the said opening (120), have the distal ends (1221) that seat onto each other and can be fixed to each other by mechanical, chemical or welding methods when closed towards the holding sleeve (121), when fixed in this way, complete the said circular arc (1210) to a closed full circle by surrounding the said opening (120) on the holding sleeve (121).

6. The quick connector element (100) as in Claim 5, **characterized in that** the said distal ends (1221) have locking means (124-127) providing the said distal ends (1221) to be fixed to each other by mechanical connection.

7. The quick connector element (100) as in Claim 3, **characterized in that** the said auxiliary elements are composed of a single arm (122) which is movably connected to the holding sleeve (121) at one side of the said opening (120), has a distal end (1221) that can be fixed on the holding sleeve (121) by mechanical, chemical or welding methods by being closed and when fixed in this way, forms a full circle by completing the opening (120) on the holding sleeve (121) where the diameter (□1) said circle is smaller than the outer diameter (□2) of the hose (3) mounted on the tail portion (22).

8. The quick connector element (100) as in Claims 2, **characterized in that** the said auxiliary elements are composed of a compression collar (99) which is in hollow cylindrical form and which can be slipped over the holding sleeve (121') by being moved in the axial direction.

9. The quick connector element (100) as in Claim 8, **characterized in that** the said holding sleeve (121') has a conical external face (1212) and preferably an internal face (1219) in toothed, grooved or serrated form.

10. The quick connector element (100) as in Claim 9, **characterized in that** the said compression collar (99) has a conical internal face (992) so as to seat onto the said external surface (1212) of the holding sleeve (121').

11. The quick connector element (100) as in Claim 10, **characterized in that** the said holding sleeve (121') has the axial slits (1215) enabling the said holding sleeve (121') to be radially compressed when the compression collar (99) is slipped there over.

12. The quick connector element (100) as in Claim 11, **characterized in that** the said compression collar (99) is secured on the holding sleeve (121') by means of locking, screwing, welding or adhesion.

13. The quick connector element (100) as in Claim 12, **characterized in that** the said compression collar (99) has locking means composed of a tenon (995) extending towards the coupling body (2) and which has a protuberance (997) that engages in an indentation (998) provided on the coupling body (2).

14. The quick connector element (100) as in Claim 12, **characterized in that** the said compression collar (99) has locking means composed of an indentation (998) that a protuberance (997) on the tenon (995) provided on the coupling body (2) is engaged with.

15. The quick connector element (100) as in Claims 1 - 14, wherein the said bridge (13) joins the web (111) of the said fixing portion (11) and the said holding sleeve (121, 121') of the said fixing portion (12, 12') and has preferably a S-shaped profile.

## Patentansprüche

1. Steckanschlusselement (100), das dazu dient, einen flexible Schlauch (3) mit einem starren Rohr (4) mit einem Umfangswulst (41) an einem Ende desselben lösbar zu verbinden, und das aus einem hohlen Zylinderkörper (2) und einem Halteelement (1) gebildet ist, das an diesem Körper (2) angebracht ist, wobei der Körper (2) einen Hinterendabschnitt (22), der in den flexiblen Schlauch (3) gesteckt werden kann und eine Außenfläche in gezahnter, gerillter oder glatter Form aufweist, und ein Mundstück (21) aufweist, in das das starre Rohr (4) eingeführt werden kann und an dem zwei gegenüberliegende Umfangsschlitze (25) angeordnet sind,
wobei das Halteelement (1) vorzugsweise aus Kunststoffmaterial mittels Spritzgießen hergestellt ist und gebildet ist aus
- einem Befestigungsabschnitt (12), der bei der Verwendung auf dem flexible Schlauch (3) sitzt, der in montierter Position über den Hinterendabschnitt (22) des Körpers (2) geführt ist, und den flexiblen Schlauch (3) unbemerkbar am Hinterendabschnitt (22) sichert, indem er in an seinem Umfang umgibt und zusammendrückt, und
- einem Arretierabschnitt (11), der in montierter Position auf dem Mundabschnitt (21) des Körpers (2) sitzt und das starre Rohr (4) auf leicht lösbare Weise in dem Mundabschnitt (21) sichert, und der aus einem Steg (111), der über dem Körper (2) bleibt, und flexiblen Schäften (112) gebildet ist, die sich von beiden Enden des Stegs (111) erstrecken und in Eingriff mit dem Umfangswulst (41) des starren Rohres (4) gelangen, indem sie durch die Schlitze (25) auf beiden Seiten am Körper (2) treten,
- einer Brücke (13), die den Arretier- und den Befestigungsabschnitt (11, 12) verbindet,
und
wobei der Körper (2) ferner axiale Stützwünde (26), die auf beiden axialen Seiten der Schlitze (25) aus dem Körper (2) vorspringen, und eine radiale Stützwand (27) aufweist, die an seiner Unterseite und in Umfangsrichtung zwischen den Schlitzen (25) vorspringt, derart, dass die radiale Stützwand (27) eine geneigte Fläche (270) aufweist, die das freie Ende (1121) der Schäfte (112) stützt, wenn die Schäfte (112) in die Schlitze (25) treten.

2. Steckanschlusselement (100) nach Anspruch 1, **dadurch gekennzeichnet, dass** der Befestigungsabschnitt (12) aus seiner Haltehüse (121, 121'), die einen etwa C-förmigen Querschnitt aufweist, der einem Kreisbogen (1210) folgt, und die eine Öffnung von 30° bis 150° (120) aufweist, und Hilfselementen gebildet ist, die die Haltehüse (121, 121') am flexiblen Schlauch (3) sichern.

3. Steckanschlusselement (100) nach Anspruch 2, **dadurch gekennzeichnet, dass** die Hilfselemente aus wenigstens einem, vorzugsweise zwei Armen (122) gebildet sind, die an der Haltehülse (121) angebracht vorgesehen sind.

4. Steckanschlusselement (100) nach Anspruch 3, **dadurch gekennzeichnet, dass** die Verbindung zwischen dem Arm (122) und der Haltehülse (121) in einem Bereich (123') erreicht wird, der einen Stift (128') umfasst, der an dem Arm (122) angeordnet ist und in einem Stiftloch (129') sitzt, das an der Haltehülse (121) angeordnet ist, oder in einem Bereich (123"), der einen unabhängigen Stift (128') umfasst, der in einem Stiftloch (129') sitzt, das konzentrisch am Arm (122) und der Haltehülse (121) vorgesehen ist, oder vorzugsweise einem Bereich (123), der als einer flexiblen Dünnfilmzone gebildet ist.

5. Steckanschlusselement (100) nach Anspruch 4, **dadurch gekennzeichnet, dass** die Hilfselemente aus zwei Armen (122) gebildet sind, die an beiden Seiten der Öffnung (120) beweglich mit der Haltehülse (121) verbunden sind und distale Enden (1221) aufweisen, die aufeinander sitzen und durch mechanische, chemische oder Schweißverfahren aneinander befestigt werden können, wenn sie zur Haltehülse (121) hin geschlossen werden, und die, wenn sie derart befestigt sind, den Kreisbogen (1210) zu einem geschlossenen Kreis vervollständigen, indem sie die Öffnung (120) an der Haltehülse (121) umgeben.

6. Steckanschlusselement (100) nach Anspruch 5, **dadurch gekennzeichnet, dass** die distalen Enden (1221) Verriegelungsmittel (124-127) aufweisen, die es ermöglichen, dass die distalen Enden (1221) durch mechanisches Verbinden aneinander befestigt werden.

7. Steckanschlusselement (100) nach Anspruch 3, **dadurch gekennzeichnet, dass** die Hilfselemente aus einem einzelnen Arm (122) gebildet sind, der an einer Seite der Öffnung (120) beweglich mit der Haltehülse (121) verbunden ist, ein distales Ende (1221) aufweist, das durch mechanische, chemische oder Schweißverfahren mittels Schließen an der Haltehüse (121) befestigt werden kann und der, wenn er derart befestigt ist, einen vollständigen Kreis bildet, indem er die Öffnung (120) an der Haltehülse (121) dort vervollständigt, wo der Durchmesser (°1) des Kreises kleiner als der Außendurchmesser (°2) des Schlauchs (3) ist, der an dem Hinterendabschnitt (22) angebracht ist.

8. Steckanschlusselement (100) nach Anspruch 2, **dadurch gekennzeichnet, dass** die Hilfselemente aus einer Druckmanschette (99) gebildet sind, die eine hohle Zylinderform aufweist und über die Haltehülse (121') geschoben werden kann, indem sie in axialer Richtung bewegt wird.

9. Steckanschlusselement (100) nach Anspruch 8, **dadurch gekennzeichnet, dass** die Haltehülse (121') eine konische Außenfläche (1212) und vorzugsweise eine Innenfläche (1219) in gezahnter, gerillter oder gezackter Form aufweist.

10. Steckanschlusselement (100) nach Anspruch 9, **dadurch gekennzeichnet, dass** die Druckmanschette (99) eine konische Innenfläche (992) aufweist, derart, dass sie auf der Außenfläche (1212) der Haltehülse (121') sitzt.

11. Steckanschlusselement (100) nach Anspruch 10, **dadurch gekennzeichnet, dass** die Haltehülse (121') die axialen Schlitze (1215) aufweist, die es der Haltehülse (121') ermöglichen, radial zusammengedrückt zu werden, wenn die Druckmanschette (99) darüber geschoben wird.

12. Steckanschlusselement (100) nach Anspruch 11, **dadurch gekennzeichnet, dass** die Druckmanschette (99) durch Verriegeln, Schrauben, Schweißen oder Kleben an der Haltehülse (121') gesichert ist.

13. Steckanschlusselement (100) nach Anspruch 12, **dadurch gekennzeichnet, dass** die Druckmanschette (99) ein Verriegelungsmittel aufweist, das aus einem Zapfen (995) gebildet ist, der sich zum Koppelungskörper (2) erstreckt und einen Vorsprung (997) aufweist, der in eine Vertiefung (998) eingreift, die am Koppelungskörper (2) vorgesehen ist.

14. Steckanschlusselement (100) nach Anspruch 12, **dadurch gekennzeichnet, dass** die Druckmanschette (99) ein Verriegelungsmittel aufweist, das aus einer Vertiefung (998) gebildet ist, in die ein Vorsprung (997) on dem Zapfen (995), der am Koppelungskörper (2) vorgesehen ist, eingreift.

15. Steckanschlusselement (100) nach den Ansprüchen 1 bis 14, wobei die Brücke (13) den Steg (111) des Befestigungsabschnitts (11) und die Haltehülse (121, 121') des Befestigungsabschnitts (12, 12') verbindet und vorzugsweise ein S-förmiges Profil aufweist.

## Revendications

1. Un élément de raccord rapide (100) qui est utilisé pour raccorder de manière détachable un tuyau flexible (3) à un tuyau rigide (4) qui présente une bosse périphérique (41) sur l'extrémité de celui-là, qui se compose d'un corps cylindrique creux (2) et un élément de retenue (1) monté sur ledit corps (2), ledit corps (2) présentant une partie de queue (22) qui peut être insérée dans ledit tuyau flexible (3) et qui présente une face externe en forme dentée, rainuré ou régulière, et une partie d'entrée (21) dans laquelle ledit tuyau rigide (4) peut être inséré et sur laquelle deux fentes périphériques opposées (25) sont arrangées,
où ledit élément de retenue (1) est de préférence produit d'une matière plastique par moulage par injection et se compose de
- une partie de fixation (12) qui, en cours d'utilisation, est placée sur le tuyau flexible (3) monté sur la partie de queue (22) du corps (2) en position assemblée et qui fixe de manière non détachable le tuyau flexible (3) sur la partie de queue (22) en l'entourant et serrant de manière circonférentielle, et
- une partie de verrouillage (11) qui est placée sur la partie d'entrée (21) du corps (2) en position assemblée et fixe de manière facilement détachable le tuyau rigide (4) dans ladite partie d'entrée (21), et qui se compose d'une âme (111) qui reste sur le corps (2) et des tiges flexibles (112) qui s'étendent à partir des deux extrémités de ladite âme (111) et viennent en prise avec la bosse périphérique (41) du tuyau rigide (4) en passant à travers lesdites fentes (25) sur le corps (2) aux deux côtés,
- un pont (13) qui attache les parties de verrouillage et de fixation (11, 12) les unes aux autres
et
ledit corps (2) présentant en outré des parois de support axiales (26) faisant saillie à partir du corps (2) aux deux côtés axiaux desdites fentes (25) et une paroi de support radiale (27) faisant saillie au côté inférieur de celui-ci et de manière circonférentielle entre lesdites fentes (25) de telle sorte que ladite paroi de support radiale (27) présente une surface inclinée (270) supportant l'extrémité libre (1121) des tiges (112) lorsque lesdites tiges (112) entrent dans lesdites fentes (25).

2. Un élément de raccord rapide (100) selon la revendication 1, **caractérisé en ce que** ladite partie de fixation (12) se compose d'un manchon de retenue (121, 121') avec une section transversale approximativement en forme de C qui fait suite à un arc circulaire (1210) et qui présente une ouverture de 30° - 150° (120), et des éléments auxiliaires qui fixent le manchon de retenue (121, 121') sur le tuyau flexible (3).

3. Un élément de raccord rapide (100) selon la revendication 2, **caractérisé en ce que** lesdits éléments auxiliaires se composent d'au moins un, préférablement deux bras (122) disposés comme fixés au manchon de retenue (121).

4. Un élément de raccord rapide (100) selon la revendication 3, **caractérisé en ce que** la liaison entre le bras (122) et le manchon de retenue (121) est réalisée dans une zone (123') comprenant une goupille (128') disposée sur le bras (122) placé dans un trou de goupille (129') arrangé sur le manchon de retenue (121) ou dans une zone (123") comprenant une goupille indépendante (128') placée dans un trou de goupille (129') arrangé de manière concentrique sur le bras (122) et le manchon de retenue (121) ou de préférence dans une zone (123) composée d'une zone de couche mince flexible.

5. Un élément de raccord rapide (100) selon la revendication 4, **caractérisé en ce que** lesdits éléments auxiliaires se composent de deux bras (122) qui sont reliés de manière mobile au manchon de retenue (121) aux deux côtés de ladite ouverture (120), qui présentent les extrémités distales (1221) qui sont placées les unes sur les autres et peuvent être fixées les unes aux autres par des méthodes telles que mécanique, chimique ou de soudage lorsqu'elles sont fermées vers le manchon de retenue (121), et qui, lorsqu'elles sont fixées comme ça, complètent ledit arc circulaire (1210) à un cercle complet fermé en entourant ladite ouverture (120) sur le manchon de retenue (121).

6. Un élément de raccord rapide (100) selon la revendication 5, **caractérisé en ce que** lesdites extrémités distales (1221) présentent des moyens de verrouillage (124-127) qui permettent auxdites extrémités distales (1221) d'être fixées les unes aux autres par raccordement mécanique.

7. Un élément de raccord rapide (100) selon la revendication 3, **caractérisé en ce que** lesdits éléments auxiliaires se composent d'un seul bras (122) qui est relié de manière mobile au manchon de retenue (121) à un côté de ladite ouverture (120), qui présente une extrémité distale (1221) qui peut être fixée par des méthodes telles que mécanique, chimique ou de soudage en étant fermée, et qui, lorsqu'elle est fixée comme ça, forme un cercle complet en complétant l'ouverture (120) sur le manchon de retenue (121) où le diamètre (°1) dudit cercle est inférieur au diamètre extérieur (°2) du tuyau (3) monté sur la partie de queue (22).

8. Un élément de raccord rapide (100) selon la revendication 2, **caractérisé en ce que** lesdits éléments auxiliaires se composent d'une bague de compression (99) en forme cylindrique creuse qui peut être glissée sur le manchon de retenue (121') en étant déplacé dans la direction axiale.

9. Un élément de raccord rapide (100) selon la revendication 8, **caractérisé en ce que** ledit manchon de retenue (121') présente une face externe conique (1212) et de préférence une face interne (1219) en forme dentée, rainuré ou dentelée.

10. Un élément de raccord rapide (100) selon la revendication 9, **caractérisé en ce que** ladite bague de compression (99) présente une face interne conique (992) de manière à être placée sur ladite face externe (1212) du manchon de retenue (121').

11. Un élément de raccord rapide (100) selon la revendication 10, **caractérisé en ce que** ledit manchon de retenue (121') présente des fissures axiales (1215) qui permettent ledit manchon de retenue (121') d'être comprimé radialement lorsque la bague de compression (99) est glissée sur celui-ci.

12. Un élément de raccord rapide (100) selon la revendication 11, **caractérisé en ce que** ladite bague de compression (99) est fixée sur le manchon de retenue (121') par verrouillage, vissage, soudage ou collage.

13. Un élément de raccord rapide (100) selon la revendication 12, **caractérisé en ce que** ladite bague de compression (99) présente des moyens de verrouillage composés d'un tenon (995) s'étendant vers le corps de raccord (2) et qui présente une protubérance (997) venant en prise avec une cavité (998) arrangée sur le corps de raccord (2).

14. Un élément de raccord rapide (100) selon la revendication 12, **caractérisé en ce que** ladite bague de compression (99) présente des moyens de verrouillage composés d'une cavité (998) avec laquelle une protubérance (997) sur le tenon (995) disposé sur le corps de raccord (2) vient en prise.

15. Un élément de raccord rapide (100) selon les revendications de 1 à 14, où ledit pont (13) relie l'âme (111) de ladite partie de fixation (11) audit manchon de retenue (121, 121') de ladite partie de fixation (12, 12') et présente de préférence un profil en forme de S.
